# EUROPEAN PATENT APPLICATION

(11) **EP 2 439 311 A1**
(43) Date of publication of application: **11.04.2012**
(21) Application number: 10783324.6
(22) Date of filing: 28.05.2010
(51) Int. Cl.: C23C 30/00, B32B 15/04, B32B 15/08, C25D 9/08, C25D 11/38

(54) **COPPER FOIL FOR SEMICONDUCTOR PACKAGE SUBSTRATE AND SUBSRATE FOR SEMICONDUCTOR PACKAGE**

(30) Priority: 05.06.2009 JP 2009135654
(71) Applicant: JX Nippon Mining & Metals Corporation, Tokyo 100-8164 (JP)
(72) Inventor: AKASE Fumiaki, Hitachi-city Ibaraki 317-0056 (JP)
(74) Representative: Hoarton, Lloyd Douglas Charles
(86) International application number: PCT/JP2010/059062
(87) International publication number: WO 2010/140540

(57) **Abstract**

A copper foil for a semiconductor package substrate comprising a chromate treatment layer or a coating layer made of zinc or zinc oxide and chromium oxide formed on a roughened surface of a copper foil to serve as an adherend surface with resin, and a silane coupling agent layer. With this copper foil for a semiconductor package substrate, the amount of Cr in the chromate coating layer is 25 to 150 µg/dm², and the amount of Zn is 150 µg/dm² or less. Moreover, with this copper foil for a semiconductor package substrate, the silane coupling agent layer contains tetraalkoxysilane, and at least one type of alkoxysilane comprising a functional group possessing reactivity with resin. Provided is an electrolytic treatment technique of a copper foil capable of effectively preventing the circuit corrosion phenomenon upon laminating a copper foil on a resin base material, and using a sulfuric acid-based etching solution to perform soft etching to a circuit.

## Description

### TECHNICAL FIELD

The present invention relates to a copper foil for a semiconductor package substrate having superior chemical resistance and adhesiveness, and to a substrate for a semiconductor package that is prepared using the foregoing copper foil. Particularly, in the soft etching process of laminating and bonding, on a resin, a copper foil having a chromate treatment layer or a coating treatment layer made of zinc or zinc oxide and chromium oxide formed at least on an adherend surface of the copper foil to be adhered with the resin, and a silane coupling agent layer, additionally forming an etching-resistant printed circuit on the copper foil, thereafter removing the unwanted parts of the copper foil except the printed circuit portion by way of etching to form a conductive circuit, and consequently improving the adhesiveness of the resist or buildup resin substrate and the S surface of the copper foil of the foregoing circuit, the present invention relates to a copper foil for a printed wiring board capable of effectively preventing the corrosion (circuit corrosion) phenomenon of the copper foil circuit edge that occurs in the foregoing soft etching process.

### BACKGROUND ARTS

A copper foil for a printed circuit is generally manufactured according to the following processes. Foremost, a copper foil is laminated and bonded to a base material made of synthetic resin or the like under high temperature and pressure. Subsequently, in order to form the intended conductive circuit on a substrate, a circuit pattern that is equivalent to a circuit is printed on the copper foil using a material such as etching-resistant resin.
Subsequently, the unwanted portions of the exposed copper foil are removed via etching treatment. After the etching, the printed portion is removed to form a conductive circuit on the substrate. A predetermined element is ultimately soldered on the formed conductive circuit to form various printed circuit boards for use in electronic devices.
Generally, the quality demand in a copper foil for a printed wiring board is different with an adherend surface (so-called roughened surface) to be bonded to the resin base material, and a non-adherend surface (so-called glossy surface), and it is necessary to simultaneously satisfy the two.

Demands of a glossy surface include (1) favorable appearance and no oxidation or discoloration during storage, (2) favorable solder wettability, (3) no oxidation or discoloration during high-temperature heating, (4) favorable adhesiveness with the resist, and so on.
Meanwhile, demands of a roughened surface includes (1) no oxidation or discoloration during storage, (2) sufficient peel strength with the base material even after such as high-temperature heating, wet treatment, soldering, chemical treatment, (3) no so-called stains that occur after the base material lamination and etching, and so on.
Moreover, a lower profile of copper foils is being demanded pursuant to the finer patterns in recent years.

In addition, higher frequencies of electrical signals are being used pursuant to the faster speed and larger capacity of communication in electronic devices such as personal computers and mobile communication terminals, and a printed wiring board and a copper foil capable of meeting the foregoing demands are in need. When the frequency of electrical signals becomes 1 GHz or higher, the influence of the skin effect where the current only flows on the surface of the conductor becomes significant, and the influence of the change in the current transmission path and increase in impedance caused by the irregularities of the surface can no longer be ignored. From this respect also, the surface roughness of the copper foil is desirably small.
In order to meet the foregoing demands, numerous treatment methods have been proposed for a copper foil for a printed wiring board.

The treatment method differs with a rolled copper foil and an electrolytic copper foil, and the method described below is an example of the treatment method of an electrolytic copper foil.
Specifically, foremost, in order to increase the adhesive force (peel strength) of copper and resin, generally, a thermally-protected layer (barrier layer) made of brass, zinc or the like for providing heat resistant properties is formed after applying fine particles made of copper or copper oxide on the copper foil surface (roughening treatment).
In order to prevent surface oxidation and the like during transport or storage, a rust-prevention treatment such as a dip or electrolytic chromate treatment or an electrolytic chromium/zinc treatment is ultimately performed. A product is thus obtained.

Among the above, the treatment method of forming a thermally-protected layer especially is an important factor which determines the surface texture of the copper foil. Thus, as examples of the metal or alloy used for forming the thermally-protected layer, numerous copper foils to which a coating layer made of Zn, Cu-Ni, Cu-Co, Cu-Zn or the like is formed have been put into practical use (for example, refer to Patent Document 1).
Among the above, a copper foil to which a thermally-protected layer made of Cu-Zn (brass) is formed is broadly used industrially since it yields superior characteristics such as the resin layer not being stained when it is laminated to a printed circuit board made of epoxy resin or the like, and the deterioration in the peel strength after high-temperature heating being minimal.
The method of forming this thermally-protected layer made of brass is described in detail in Patent Document 2 and Patent Document 3.

A copper foil to which this kind of thermally-protected layer made of brass is formed is subsequently subject to etching treatment to form a printed circuit. In recent years, a hydrochloric acid-based etching solution is often used for forming the printed circuit.
However, when etching treatment is performed to a printed circuit board using a copper foil to which the foregoing thermally-protected layer made of brass is formed using a hydrochloric acid-based etching solution (for example, CuCl₂, FeCl₃ or the like), a corrosion (circuit corrosion) phenomenon occurs at the so-called circuit edge (edge portion) on either end of the circuit pattern, and there is a problem in that the peel strength with the resin base material will deteriorate. Moreover, a similar problem of corrosion also occurs when a sulfuric acid-based etching solution is used.

This circuit corrosion is a phenomenon where the bonding boundary layer of the copper foil and the resin base material of the circuit formed via the foregoing etching treatment; namely, the etching-side surface where the thermally-protected layer made of brass is exposed, is corroded due to the hydrochloric acid-based etching solution, and, due to the subsequent washing being insufficient, both sides are corroded and become red while they should be yellow (due to the brass) under normal circumstances, and the peel strength of that portion is deteriorated significantly. If this phenomenon occurs across the entire surface of the circuit pattern, the circuit pattern will become separated from the base material and cause a major problem.

As the cause of the foregoing circuit corrosion phenomenon, for example, in the case of using a hydrochloric acid-based etching solution, cuprous chloride (CuCl) of low solubility is generated in the reaction process, and, when this is deposited on the base material surface, it reacts with the zinc contained in the brass, and is eluted as zinc chloride. This so-called dezincification phenomenon of brass is considered to be main cause. The presumed reaction formula is as follows.
2CuCl + Zn (zinc contained in brass) → ZnC₂ + 2Cu (copper contained in brass that was subject to dezincification)
Moreover, even when using a sulfuric acid-based etching solution, although the reaction formula is different, a similar problem of corrosion will arise.

Accordingly, a proposal has been made for improving the hydrochloric acid resistance by performing roughening treatment to the copper foil surface, performing zinc or zinc alloy rust-prevention treatment and chromate treatment thereto, and adsorbing a silane coupling agent containing a small amount of chromium ions on the surface that was subject to chromate treatment (refer to Patent Document 3).

Nevertheless, in the foregoing case, although the chromium ions yield the effect of improving the hydrochloric acid resistance, the silane coupling agent itself that was adsorbed on the copper foil surface is a material that is weak against heat and deteriorates easily. Thus, together with the deterioration of the silane coupling, there is a problem in that the chromium ions contained in the silane coupling agent follow suit and lose their effectiveness. In other words, there is a significant problem in that the foregoing method lacks stability.

Moreover, the present inventors have proposed a copper foil in which the roughness of the copper foil is reduced by way of no-roughening or low-roughening treatment pursuant to the demands of finer patterns and higher frequencies in recent years (refer to Patent Document 4).
Here, by performing appropriate surface treatment to a non-roughened or low-roughened foil, it was possible to improve the adhesion with the insulating resin for high frequencies. However, since the problem of acid resistance was prominent with a non-roughened foil, the bonding strength was lost after the acid treatment, and, since the acid resistance was insufficient even upon implementing the silicon-based pretreatment proposed in Patent Document 4, improvements were demanded.
In addition, there was a proposal of improving the hydrochloric acid resistance by reducing the amount of zinc contained in the brass. Although a certain level of effect was acknowledged with this method, it was still impossible to obtain sufficient acid resistance (refer to Patent Document 5).

[Patent Document 1] Japanese Examined Patent Application Publication No.S51-35711
[Patent Document 2] Japanese Examined Patent Application Publication No.S54-6701
[Patent Document 3] Japanese Patent No.3306404
[Patent Document 4] Japanese Patent Application No.2002-170827
[Patent Document 5] Japanese Unexamined Patent Application Publication No. H3-122298

### DISCLOSURE OF THE INVENTION

An object of this invention is to develop a copper foil for a printed wiring board capable of avoiding the foregoing circuit corrosion phenomenon without deteriorating the other various characteristics. In particular, this invention aims to provide an electrolytic treatment technique of a copper foil capable of effectively preventing the circuit corrosion phenomenon upon laminating a copper foil on a resin base material, and using a hydrochloric acid-based and sulfuric acid-based etching solution to form a circuit.

In order to achieve the foregoing object, as a result of intense study regarding the conditions and the like for forming a coating layer on a copper foil, the present inventors discovered that the following copper foil for a printed wiring board is effective for acid resistance.
Specifically, the present invention provides:
1. A copper foil for a semiconductor package substrate comprising a chromate treatment layer or a coating layer made of zinc or zinc oxide and chromium oxide formed on a roughened surface of a copper foil to serve as an adherend surface with resin, and a silane coupling agent layer;
2. The copper foil for a semiconductor package substrate according to paragraph 1 above, wherein the copper foil is an electrolytic copper foil or a rolled copper foil;
3. The copper foil for a semiconductor package substrate according to paragraph 1 or paragraph 2 above, wherein the chromate treatment layer or the coating layer made of zinc or zinc oxide and chromium oxide is an electrolytic chromate coating layer or a dipped chromate coating layer;
4. The copper foil for a semiconductor package substrate according to any one of paragraphs 1 to 3 above, wherein the amount of Cr in the chromate coating layer is 25 to 150 µg/dm², and the amount of Zn is 150 µg/dm² or less;
5. The copper foil for a semiconductor package substrate according to any one of paragraphs 1 to 4 above, wherein the silane coupling agent layer contains tetraalkoxysilane, and at least one type of alkoxysilane comprising a functional group possessing reactivity with resin; and
6. A substrate for a semiconductor package prepared by laminating the copper foil for a semiconductor package substrate according to any one of paragraphs 1 to 5 above, and a resin for a semiconductor package.

As described above, the copper foil for a printed wiring board of the present invention is provided with new characteristics of being able to effectively prevent the circuit corrosion phenomenon and constantly and stably exhibit the effect of acid resistance without having to use a thermally-protected layer made of brass, which used to be considered an essential requirement to prevent deterioration in the peel strength with resin after high-temperature heating, and is extremely effective as a copper foil for a printed circuit under the recent developments where finer patterns and higher frequencies of a printed circuit are demanded.

### BRIEF DESCRIPTION OF THE DRAWINGS

Fig. 1 is an SEM image of the peeled copper foil surface after the 4 µm etching of Example 1.
Fig. 2 is an SEM image of the peeled copper foil surface after the 4 µm etching of Example 2.
Fig. 3 is an SEM image of the peeled copper foil surface after the 4 µm etching of Example 3.
Fig. 4 is an SEM image of the peeled copper foil surface after the 4 µm etching of Example 4.
Fig. 5 is an SEM image of the peeled copper foil surface after the 4 µm etching of Comparative Example 1.
Fig. 6 is an SEM image of the peeled copper foil surface after the 4 µm etching of Comparative Example 2.
Fig. 7 is an SEM image of the peeled copper foil surface after the 4 µm etching of Comparative Example 3.
Fig. 8 is an SEM image of the peeled copper foil surface after the 4 µm etching of Comparative Example 4.

### BEST MODE FOR CARRYING OUT THE INVENTION

The present invention is now explained specifically in detail in order to facilitate the understanding of this invention. The copper foil used in the present invention can be either an electrolytic copper foil or a rolled copper foil.
Normally, in order to increase the peel strength of the copper foil after its lamination on at least one surface of the copper foil, for example, roughening treatment of performing electrodeposition of copper in a "knobbed" shape is performed to the degreased surface of the copper foil, but the present invention can be applied to cases where the foregoing roughening treatment is performed, as well as to a non-roughened copper foil that is not subject to roughening treatment.

In order to prevent the oxidation of the copper foil, a rust-prevention layer is formed on at least one surface of the copper foil. As the method of forming the rust-prevention layer, a conventional method can be applied to the present invention, but preferably a rust-prevention layer configured from a dipped chromate treatment layer or an electrolytic chromate treatment layer or a zinc-chromium oxide layer made of zinc or zinc oxide and chromium oxide is formed. The amount of Cr contained in the rust-prevention layer is preferably 25 to 150 µg/dm².
If the amount of Cr is less than 25 µg/dm², there is no effect of the rust-prevention layer. Moreover, if the amount of Cr exceeds 150 µg/dm², the effect becomes saturated and wasted. Accordingly, the amount of Cr is preferably 25 to 150 µg/dm².
Moreover, the amount of Zn is preferably 150 µg/dm² or less. If the amount of Zn exceeds 150 µg/dm², circuit corrosion caused by the sulfuric acid/hydrogen peroxide mixture treatment or the like will occur, and the adhesion strength will deteriorate.
This rust-prevention treatment is one of the factors that influence the acid resistance, and the acid resistance can be further improved based on chromate treatment.

An example of the electrolytic conditions for forming the rust-prevention layer is indicated below by way of reference.
(a) Dip chromate treatment
   K₂Cr₂O₇: 1 to 5 g/L, pH: 2.5 to 4.5, temperature: 40 to 60°C, time: 0.5 to 8 seconds
(b) Electrolytic chromate treatment (chromium/zinc treatment (alkaline bath)) K₂Cr₂O₇: 0.2 to 20 g/L, acid: phosphoric acid, sulfuric acid, organic acid, pH: 1.0 to 3.5, temperature: 20 to 40°C, current density: 0.1 to 5 A/dm², time: 0.5 to 8 seconds
(c) Electrolytic chromium/zinc treatment (alkaline bath)
   K₂Cr₂O₇ (Na₂Cr₂O₇ or CrO₃): 2 to 10 g/L, NaOH or KOH: 10 to 50 g/L, ZnOH or ZnSO₄•7H₂O: 0.05 to 10 g/L, pH: 7 to 13, bath temperature: 20 to 80°C, current density: 0.05 to 5 A/dm², time: 5 to 30 seconds
(d) Electrolytic chromate treatment (chromium/zinc treatment (acidic solution))
   K₂Cr₂O₇: 2 to 10 g/L, Zn: 0 to 0.5 g/L, Na₂SO₄: 5 to 20 g/L, pH: 3.5 to 5.0, bath temperature: 20 to 40°C, current density: 0.1 to 3.0 A/dm², time: 1 to 30 seconds

After the rust-prevention treatment, a silane coupling agent treatment is performed for improving the adhesion with the resin substrate, and improving the heat resistance, humidity resistance and weather resistance. The silane coupling agent layer preferably contains tetraalkoxysilane, and at least one type of alkoxysilane comprising a functional group possessing reactivity with resin.
The tetraalkoxysilane is effective for improving heat resistance and humidity resistance, and in particular a significant effect is yielded when the amount of Zn in the rust-prevention layer is small. Moreover, the alkoxysilane comprising a functional group possessing reactivity with resin reacts with the functional group in the resin or promotes the effect of the resin, and is effective to improve the adhesion.

As the tetraalkoxysilane compound, used may be, for example, tetramethoxysilane, tetraethoxysilane, tetrapropoxysilane, tetraisopropoxysilane, tetrabutoxysilane, tetraphenoxysilane, tetraallyloxysilane, tetrakis (2-ethylbutoxy) silane, tetrakis (2-ethylhexyloxy) silane, tetrakis (2-methoxyethoxy) silane, or the like.
Moreover, as the alkoxysilane possessing reactivity with resin, used may be a type comprising a function group such as a vinyl group, epoxy group, amino group, mercapto group, halogen group, hydroxyl group, and imidazole group.

The surface treatment agent of the present invention can be applied directly on the metal surface, but a method of diluting the surface treatment agent to be 0.001 to 10 wt%, and preferably 0.01 to 6 wt% using water; alcohols such as methanol or ethanol; or solvents such as acetone, ethyl acetate or toluene, and dipping the copper foil in this solution, or applying this solution on the surface of the copper foil via spraying can be preferably adopted to simplify the application process.
If it is less than 0.001 wt%, the improvement effect of adhesiveness and resistance to soldering heat is low, and if it exceeds 10 wt%, this is undesirable since the effect will become saturated and the solubility will deteriorate. A copper clad laminate can be formed by drying the copper foil to which the surface treatment agent was applied, subsequently bonding it to a prepreg, and then heating and curing the product.

### [Examples]

The Examples and Comparative Examples of the present invention are now explained. These Examples are merely illustrative, and the present invention shall in no way be limited thereby. In other words, various modifications and other embodiments based on the technical spirit claimed in the claims shall be included in the present invention as a matter of course.
Note that Comparative Examples are also indicated for comparison with the present invention.

### (Examples 1 to 4)

An electrolytic copper foil having a thickness of 12 µm was used, and roughening particles were formed on the roughened surface (matte surface: M surface) of the copper foil by using a sulfuric acid copper solution to prepare a roughened copper foil having a surface roughness of Rz 3.7 µm or 3.2 µm.
In addition, the following electrolytic chromate treatment was performed to form a rust-prevention layer in which the amount of Zn was changed. Subsequently, silane treatment (via application) was performed on this rust-prevention layer. The silane treatment was performed using TEOS (tetraethoxysilane) as the tetraalkoxysilane, and epoxysilane as the at least one type of alkoxysilane comprising a functional group possessing reactivity with resin.
The rust-prevention treatment conditions are shown below.

(a) Electrolytic chromate treatment (chromium/zinc treatment (acidic solution))
K₂Cr₂O₇ (Na₂Cr₂O₇ or CrO₃): 2 to 10 g/L Zn: 0 to 0.5 g/L, Na₂SO₄: 5 to 20 g/L, pH: 3.5 to 5.0, bath temperature: 20 to 40°C, current density: 0.1 to 3.0 A/dm², time: 1 to 30 seconds

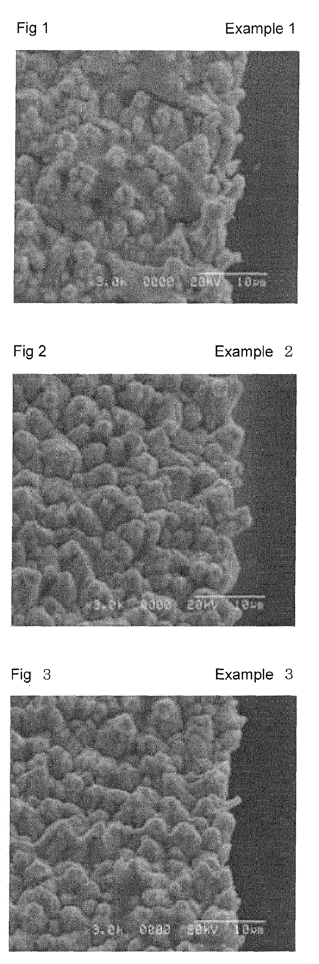

The copper foil that was prepared as described above was laminated and bonded with a glass cloth base material BT (bismaleimide triazine) resin board, and the following items were measured or analyzed.
(1) Analysis of Zn amount and Cr amount
   The analysis of the amounts of Zn and Cr on the outermost surface of the copper foil after forming the silane coupling agent layer is shown in Table 1.
   The Zn amount was 36 to 144 µg/dm²; the Cr amount was 38 to 88 µg/dm².
(2) Test results of sulfuric acid/hydrogen peroxide mixture resistance properties (sulfuric acid/hydrogen peroxide mixture treatment: sulfuric acid: 10%, hydrogen peroxide: 2%, room temperature: 30°C)
Upon placing a mask and forming a circuit having a width of 0.4 mm, the peel strength before and after the treatment was measured and evaluated. In the foregoing case, two cases were examined; namely, a case where the copper foil thickness was etched 2 µm, and a case where the copper foil thickness was etched 4 µm. Foremost, the amount of corrosion (roughening damage) of the edge portion of the roughened layer after the treatment is shown in Table 1. As the evaluation of the roughening damage, the results upon peeling the copper foil that was etched 4 µm from the resin substrate and viewing the copper foil surface as an SEM image are shown in Fig. 1 to Fig. 4.
As evident from Fig. 1 to Fig. 4, there is no damage to the copper foil at the edge portion of the circuit, and no recession of the edge portion of the circuit was observed. In other words, no corrosion of the circuit edge part caused by the sulfuric acid/hydrogen peroxide mixture treatment could be acknowledged. Moreover, as shown in Table 1, in the case of 2 µm etching, the deterioration rate of the peel strength upon comparison between pre-treatment and post-treatment of the sulfuric acid/hydrogen peroxide mixture treatment was within the range of 1.5 to 19.1%, and in the case of 4 µm etching, the deterioration rate between pre-treatment and post-treatment was within the range of 16.9 to 23.6. In both cases the sulfuric acid/hydrogen peroxide mixture resistance properties were within a favorable range.

**Table 1**

| | roughness of M surface | surface analysis on M surface | | silane coupling agent treatment | sulfuric acid/hydrogen peroxide mixture resistance properties | | | | | | | | peel strength after PCT | | | hydrochloric acid resistance | | |
|---|---|---|---|---|---|---|---|---|---|---|---|---|---|---|---|---|---|---|
| | | | | | roughening damage | | sulfuric acid/hydrogen peroxide mixture treatment (2µm etching) | | | sulfuric acid/hydrogen peroxide mixture treatment (4µm etching) | | | | | | | | |
| | Rz(µm) | Zn (µg/dm²) | Cr (µg/dm²) | | 2µm etching (µm) | 4µm etching (µm) | pre-treatment | post-treatment | loss (%) | pre-treatment | post-treatment | loss (%) | pre-treatment | post-treatment | loss (%) | pre-treatment | post-treatment | loss (%) |
| Example 1 | 3.7 | 36 | 70 | epoxy/ TEOS | 0 | 0 | 44.5 | 39 | 12.4 | 44.5 | 37 | 16.9 | 40 | 27 | 32.5 | 40 | 40 | 0 |
| Example 2 | 3.7 | 144 | 88 | epoxy/ TEOS | 0 | 0 | 44.5 | 36.0 | 19.1 | 44.5 | 34 | 23.6 | 44.5 | 28 | 37.1 | 44.5 | 40.0 | 10.1 |
| Example 3 | 3.2 | 41 | 59 | epoxy/ TEOS | 0 | 0 | 31 | 30.5 | 1.6 | 31 | 25.5 | 17.7 | 33 | 21.3 | 35.4 | 33 | 27 | 18.2 |
| Example 4 | 3.2 | 133 | 38 | epoxy/ TEOS | 0 | 0 | 32.5 | 32.0 | 1.5 | 32.5 | 26.0 | 20.0 | 32.3 | 21 | 35.0 | 32.3 | 32.3 | 0.0 |
| Comparative Example 1 | 3.7 | 178 | 67 | epoxy/ TEOS | 0 | 7.0 | 39.5 | 31.5 | 20.3 | 39.5 | 25.0 | 36.7 | 39.5 | 25 | 36.7 | 39.5 | 33.0 | 16.5 |
| Comparative Example 2 | 3.7 | 481 | 71 | epoxy/ TEOS | 2.5 | 12 | 41.0 | 36.5 | 11.0 | 41.0 | 23 | 43.9 | 41.0 | 26.0 | 36.6 | 41.0 | 39.0 | 4.9 |
| Comparative Example 3 | 3.7 | 36 | 70 | epoxy | 0 | 0 | 41 | 35.5 | 13.4 | 41 | 35.5 | 13.4 | 40.3 | 9.7 | 76 | 40.3 | 35 | 13.2 |
| Comparative Example 4 | 3.2 | 41 | 59 | epoxy | 0 | 0 | 25 | 21 | 16 6 | 25 | 17.5 | 30 | 33.3 | 2 | 94 | 33.3 | 23 | 31 |

### (3) Peel strength after PCT (pressure cooker test)

Similarly, a circuit having a width of 0.4 mm was formed and the peel strength before and after the treatment was measured and evaluated. The peel strength before and after performing a test of leaving the circuit for 48 hours under the conditions of 121°C, 100%, and pressure of two atmospheres, and the peel strength after the treatment was favorable in all cases at 20 g/0.4 mm or more.

### [(4) Hydrochloric acid resistance test

With respect to the hydrochloric acid resistance also, similarly, a circuit having a width of 0.4 mm was formed and the peel strength before and after the treatment was measured and evaluated. The deterioration rate after dipping the circuit in 12 wt% of hydrochloric acid at 60°C for 90 minutes was evaluated. The results were 0 to 18.2%, and were within a favorable range.

### (Comparative Examples 1 to 4)

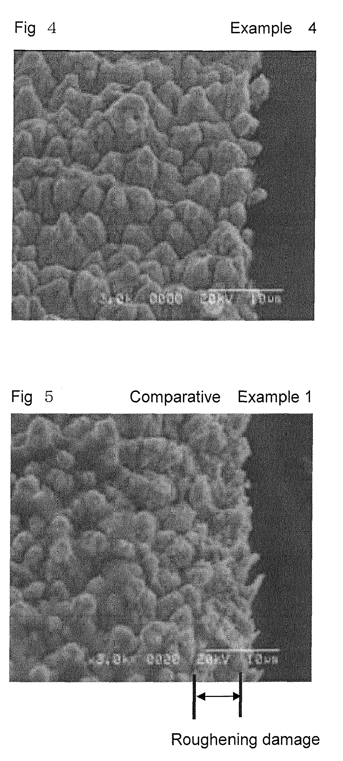

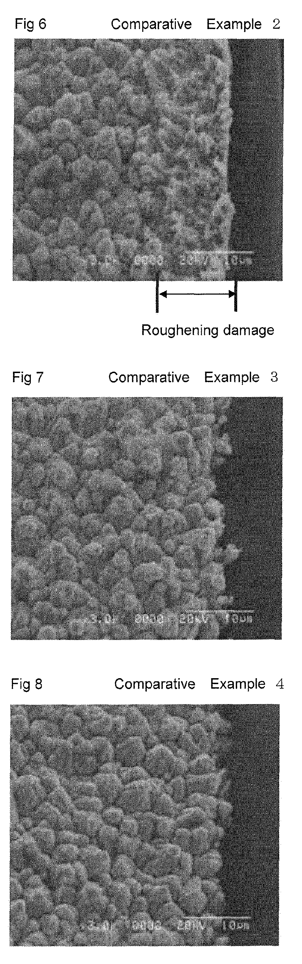

An electrolytic copper foil having a thickness of 12 µm was used, and roughening particles were formed on the roughened surface (matte surface: M surface) of the copper foil by using a sulfuric acid copper solution to prepare a roughened copper foil having a surface roughness of Rz 3.7 µm or 3.2 µm.
In addition, the following electrolytic chromate treatment was performed to form a rust-prevention layer in which the amount of Zn was changed. Subsequently, silane treatment (via application) was performed on this rust-prevention layer, and the same evaluation as the Examples was performed. The evaluation results are shown in Table 1.
Moreover, the results upon peeling the copper foil that was etched 4 µm in the sulfuric acid/hydrogen peroxide mixture treatment from the resin substrate and viewing the copper foil surface as an SEM image are shown in Fig. 5 to Fig. 8.

With respect to the test results of the sulfuric acid/hydrogen peroxide mixture resistance properties (sulfuric acid/hydrogen peroxide mixture treatment: sulfuric acid: 10%, hydrogen peroxide: 2%, room temperature: 30°C), similarly, a circuit having a width of 0.4 mm was formed, and the peel strength before and after the treatment was measured and evaluated. Here, as with the Examples, two cases were examined; namely, a case where the copper foil thickness was etched 2 µm, and a case where the copper foil thickness was etched 4 µm.
Fig. 5 to Fig. 8 show the SEM photographs of the 4 µm etching. With Comparative Example 1 and Comparative Example 2, the circuit corrosion caused by the sulfuric acid/hydrogen peroxide mixture treatment had advanced as a result of causing the zinc contained in the heat-resistance/rust-prevention layer to be 150 µg/dm² or more, and it can be seen that the roughening particles have melted at the 7 to 12 µm of the edge. Here, there is concern regarding the deterioration of adhesion and circuit peeling with a fine pattern.
Moreover, as shown in Table 1, in the case of 2 µm etching, although there was no roughening damage in Comparative Example 1, there was roughening damage of 2.5 µm in Comparative Example 2.

Moreover, as shown in Table 1, in the case of performing the 2 µm etching in the sulfuric acid/hydrogen peroxide mixture treatment, the loss before and after the treatment is within the range of 11.0% to 20.3%, and in the case of performing the 4 µm etching, the loss before and after the treatment is within the range of 36.7% to 43.9%, and in both cases the sulfuric acid/hydrogen peroxide mixture resistance properties had deteriorated.
Meanwhile, with Comparative Example 3 and Comparative Example 4, tetraalkoxysilane was not used in the silane treatment but epoxysilane was used independently. However, the roughening damage could not be observed, and the sulfuric acid/hydrogen peroxide mixture resistance properties were also the same level as the Examples. However, there was a problem in that the deterioration rate of the peel strength in the PCT (pressure cooker test) increased to 76% to 94%.

As described above, with Examples 1 to 4, circuit corrosion caused by the sulfuric acid/hydrogen peroxide mixture treatment could not be observed, and the deterioration in the peel strength after the PCT (pressure cooker test) was also minimal. However, with Comparative Examples 1 and 2, circuit corrosion caused by the sulfuric acid/hydrogen peroxide mixture treatment was significant, and with Comparative Examples 3 and 4, there was considerable deterioration in the peel strength after the PCT (pressure cooker test), and it was confirmed that the present invention is effective in improving the acid resistance, heat resistance and humidity resistance.
As the copper foil for a semiconductor package substrate, it is effective to provide a chromate treatment layer or a coating layer made of zinc or zinc oxide and chromium oxide on a roughened surface of a copper foil to serve as an adherend surface with resin, and a silane coupling agent layer, and in particular it is desirable for the silane coupling agent layer to contain tetraalkoxysilane, and alkoxysilane comprising a functional group possessing reactivity with resin.

### INDUSTRIAL APPLICABILITY

As described below, the present invention discovered that it is possible to effectively prevent the circuit corrosion phenomenon by reducing the amount of Zn in the heat-resistance/rust-prevention layer formed on the adherend surface of the copper foil to be adhered to the resin, and forming a silane coupling agent layer containing tetraalkoxysilane, and at least one type of alkoxysilane or more comprising a functional group possessing reactivity with resin.
Moreover, the surface treatment copper foil formed as described above is provided with new characteristics of being able to effectively prevent the circuit corrosion phenomenon when it is laminated on a resin base material, and this was unimaginable in the past. The present invention can be suitably used as a copper foil for a printed circuit under the recent developments where finer patterns and higher frequencies of a printed circuit are demanded.

## Claims

1. A copper foil for a semiconductor package substrate comprising a chromate treatment layer or a coating layer made of zinc or zinc oxide and chromium oxide formed on a roughened surface of a copper foil to serve as an adherend surface with resin, and a silane coupling agent layer.

2. The copper foil for a semiconductor package substrate according to claim 1, wherein the copper foil is an electrolytic copper foil or a rolled copper foil.

3. The copper foil for a semiconductor package substrate according to claim 1 or claim 2, wherein the chromate treatment layer or the coating layer made of zinc or zinc oxide and chromium oxide is an electrolytic chromate coating layer or a dipped chromate coating layer.

4. The copper foil for a semiconductor package substrate according to any one of claims 1 to 3, wherein the amount of Cr in the chromate coating layer is 25 to 150 µg/dm², and the amount of Zn is 150 µg/dm² or less.

5. The copper foil for a semiconductor package substrate according to any one of claims 1 to 4, wherein the silane coupling agent layer contains tetraalkoxysilane, and at least one type of alkoxysilane comprising a functional group possessing reactivity with resin.

6. A substrate for a semiconductor package prepared by laminating the copper foil for a semiconductor package substrate according to any one of claims 1 to 5, and a resin for a semiconductor package.
